# EUROPEAN PATENT APPLICATION

(11) **EP 4 282 279 A1**
(43) Date of publication of application: **29.11.2023**
(21) Application number: 21921068.9
(22) Date of filing: 25.01.2021
(51) Int. Cl.: A23L 27/60

(54) **MAYONNAISE-STYLE DRESSING**

(71) Applicant: House Wellness Foods Corporation, Hyogo 664-0011 (JP)
(72) Inventor: TOMOTAKE Muneaki, Itami-shi, Hyogo 664-0011 (JP)
(74) Representative: Jones, Nicholas Andrew
(86) International application number: PCT/JP2021/002387
(87) International publication number: WO 2022/157960

(57) **Abstract**

It is an object of the present invention to provide a mayonnaise-style dressing which has physical properties comparable to those of mayonnaise, without containing protein such as egg, and the present invention relates to a mayonnaise-style dressing obtained by mixing water, an oil or fat, a cyclodextrin, and a water-soluble gelling agent to obtain a mixture, and adding an emulsifying agent to the mixture and further mixing the mixture and the emulsifying agent.

## Description

### Technical Field

The present invention relates to a mayonnaise-style dressing comprising water, an oil or fat, a cyclodextrin, a water-soluble gelling agent, and an emulsifying agent.

### Background Art

Mayonnaise is a semi-solid dressing containing an oil or fat, egg, vinegar, etc. as main raw materials, and enjoys popularity as a seasoning for various foods such as salad.

On the other hand, mayonnaise contains eggs, and therefore people who are allergic to eggs cannot eat mayonnaise. On that account, mayonnaise-style dressings containing no eggs which even people who are allergic to eggs can eat have been developed and reported.

Patent Literature 1 discloses a mayonnaise-like food using, instead of egg yolk, films (fresh *Yuba*) scooped up from a surface of heated soy milk.

Patent Literature 2 discloses a mayonnaise-like seasoning containing organic acids, a skimmed milk powder, xanthan gum, and microcrystalline cellulose.

Patent Literature 3 discloses a mayonnaise-style seasoning containing no refined oil or fat and no egg yolk, characterized in that fermented soy milk and an aqueous seasoning liquid are main components, and starch and agar are added to them to impart viscosity.

Patent Literature 4 discloses a mayonnaise-type seasoning that does not use egg yolk but uses soy milk instead thereof.

Patent Literature 5 discloses an acidic oil-in-water type emulsified food with viscosity of mayonnaise type or the like, which contains octenylsuccinic acid-treated starch and does not use egg yolk as an emulsifying agent or has been reduced in the use thereof.

Patent Literature 6 discloses an emulsified food with mayonnaise-like taste that does not contain egg yolk but contains lysophospholipid, a soybean component, and a starchy material.

Patent Literature 7 discloses a mayonnaise flavored food, in which chicken eggs and other eggs are not used, and food raw materials having a thickening effect, such as wood ear mushroom, konjak refined flour, agar, gelatin, and kudzu, are substituted therefor to exert an emulsifying effect.

Patent Literature 8 discloses a low-fat mayonnaise composition characterized by using no eggs and containing cellulose ether, soy protein isolate, and a skimmed milk powder or starch.

However, conventional mayonnaise-style dressings containing no eggs sometimes use other proteins (e.g., soy protein) instead of eggs, and due to this, there is possibility to induce another allergy. Moreover, physical properties brought about by proteins, starch, etc. that are used instead of eggs sometimes differ from those of mayonnaise.

On that account, a mayonnaise-style dressing being free of eggs and having low possibility to induce another allergy, and also having physical properties comparable to those of mayonnaise has been still desired in the art.

### Citation List

### Patent Literature

Patent Literature 1
   Japanese Patent Laid-Open No. 2011-130681
Patent Literature 2
   Japanese Patent Laid-Open No. 5-030941
Patent Literature 3
   Japanese Patent Laid-Open No. 2008-035768
Patent Literature 4
   Japanese Patent Laid-Open No. 2004-350525
Patent Literature 5
   Japanese Patent Laid-Open No. 2005-333949
Patent Literature 6
   Japanese Patent Laid-Open No. 2003-259834
Patent Literature 7
   Japanese Patent Laid-Open No. 2002-335906
Patent Literature 8
   Japanese Patent Laid-Open No. 2014-533101

### Summary of Invention

### Technical Problem

It is an object of the present invention to provide a mayonnaise-style dressing which has physical properties comparable to those of mayonnaise, without substantially containing protein such as egg.

### Solution to Problem

The present inventors have earnestly studied to solve the above problem, and as a result, they have found that an emulsified composition obtained by adding water, an oil or fat, a cyclodextrin, a water-soluble gelling agent, and an emulsifying agent in a prescribed order can achieve physical properties comparable to those of mayonnaise, without substantially containing protein such as egg.

The present invention is based on these new findings, and includes the following inventions.
[1] A mayonnaise-style dressing comprising water, an oil or fat, a cyclodextrin, a water-soluble gelling agent, and an emulsifying agent.
[2] The mayonnaise-style dressing according to [1], being substantially free of protein.
[3] The mayonnaise-style dressing according to [1] or [2], wherein the oil or fat is one or more selected from the group consisting of canola oil, rapeseed refined oil, soybean oil, corn oil, cottonseed oil, peanut oil, sesame oil, rice oil, rice bran oil, camellia oil, safflower oil, olive oil, linseed oil, perilla oil, perilla seed oil, sunflower oil, copra oil (e.g., palm oil, coconut oil), tea oil, avocado oil, candlenut oil, grapeseed oil, cocoa butter, wheat germ oil, almond oil, evening primrose oil, castor oil, hazelnut oil, macadamia nut oil, rosehip oil, and grape oil.
[4] The mayonnaise-style dressing according to any one of [1] to [3], wherein the cyclodextrin is α-cyclodextrin.
[5] The mayonnaise-style dressing according to any one of [1] to [4], wherein the water-soluble gelling agent is one or more selected from the group consisting of carboxymethyl cellulose, glucomannan, tamarind gum, xanthan gum, t-carrageenan, locust bean gum, λ-carrageenan, κ-carrageenan, gellan gum, an alginate, and guar gum.
[6] The mayonnaise-style dressing according to any one of [1] to [5], wherein the emulsifying agent is one or more selected from the group consisting of a sucrose fatty acid ester, a glycerol fatty acid ester, a sorbitan fatty acid ester, a propylene glycol fatty acid ester, and a lecithin.
[7] The mayonnaise-style dressing according to [6], wherein the emulsifying agent has an HLB value of 3 to 16.
[8] A method for producing a mayonnaise-style dressing, comprising the following steps (1) and (2):
   (1) a step of mixing water, an oil or fat, a cyclodextrin, and a water-soluble gelling agent, and
   (2) a step of adding an emulsifying agent to a mixture obtained in the step (1) and further mixing the mixture and the emulsifying agent.
[9] A mayonnaise-style dressing produced by the method according to [8].
[10] A kit for producing a mayonnaise-style dressing, comprising an oil or fat, a cyclodextrin, a water-soluble gelling agent, and an emulsifying agent.

All publications, patents, and patent applications cited in the present specification are incorporated by reference in their entirety in the present specification.

### Advantageous Effect of Invention

According to the present invention, a mayonnaise-style dressing which has physical properties comparable to those of mayonnaise, without substantially containing protein such as egg can be provided.

### Description of Embodiments

The present invention relates to a mayonnaise-style dressing comprising water, an oil or fat, a cyclodextrin, a water-soluble gelling agent, and an emulsifying agent.

In the present invention, the "mayonnaise-style dressing" means a semi-solid dressing that is obtained by emulsifying an oil or fat in an oil-in-water form and that has physical properties equivalent or similar to those of mayonnaise, though containing no egg yolk or whole egg as a raw material differently from mayonnaise. The "physical properties" include texture, glossiness, adhesion properties, etc., and these properties can be measured by the methods described in the examples described later.

In the present invention, the "oil or fat" means an edible animal or vegetable oil or fat (sometimes also referred to as an edible oil), and such an oil or fat is one having a solid fat content (SFC) at 10°C of 0% to 35%, preferably 0% to 30%, and more preferably 0% to 25%. The oil or fat is preferably one having SFC at 20°C of 0% to 25%, preferably 0% to 20%, and more preferably 0% to 15%. Examples of the oil or fat that is usable in the present invention include canola oil, rapeseed refined oil, soybean oil, corn oil, cottonseed oil, peanut oil, sesame oil, rice oil, rice bran oil, camellia oil, safflower oil, olive oil, linseed oil, perilla oil, perilla seed oil, sunflower oil, copra oil (e.g., palm oil, coconut oil), tea oil, avocado oil, candlenut oil, grapeseed oil, cocoa butter, wheat germ oil, almond oil, evening primrose oil, castor oil, hazelnut oil, macadamia nut oil, rosehip oil, and grape oil (but not limited to), and preferably include oils and fats that are generally utilized as raw materials of mayonnaise. The edible animal oils or fats are preferably those containing no allergic substances (e.g., one or more selected from 7 specific raw materials and 21 items equivalent to specific raw materials) or those from which the allergic substances have been removed. The oils or fats may be used singly, or a combination of different oils or fats may be used.

The mayonnaise-style dressing of the present invention can contain the oil or fat in an arbitrary amount, and the content thereof can be appropriately selected based on the amount generally used in mayonnaise. For example, in the mayonnaise-style dressing, the oil or fat can be contained in an amount of 10 wt% or more, e.g., 20 wt% or more, 30 wt% or more, preferably 40 wt% or more, and more preferably 50 wt% or more. The upper limit of the amount of the oil or fat to be contained is not particularly limited, but for example, the oil or fat can be contained in an amount of 80 wt% or less, preferably 70 wt% or less, and more preferably 60 wt% or less. The range of the content of the oil or fat in the mayonnaise-style dressing of the present invention can be expressed using two numerical values individually selected from the aforementioned upper limit and lower limit numerical values. For example, in the mayonnaise-style dressing of the present invention, the oil or fat can be contained in an amount appropriately selected from the range of 10 wt% to 80 wt%, preferably 40 wt% to 70 wt%, and more preferably 50 wt% to 60 wt%.

The "cyclodextrin" means cyclic non-reducing maltooligosaccharide having glucose as a constituent unit, and examples thereof include α-cyclodextrin having 6 glucose units, β-cyclodextrin having 7 glucose units, and γ-cyclodextrin having 8 glucose units. In the present invention, α-cyclodextrin, β-cyclodextrin, γ-cyclodextrin, and arbitrary combinations thereof can be used. Preferably, α-cyclodextrin is used. The α-cyclodextrin has high solubility in water, and a mayonnaise-style dressing that is less grainy can be obtained.

In the mayonnaise-style dressing of the present invention, the cyclodextrin can be contained in an amount by which the cyclodextrin is capable of imparting, together with other components, physical properties equivalent or similar to those of mayonnaise. For example, in the mayonnaise-style dressing of the present invention, the cyclodextrin can be contained in an amount of 0.1 wt% or more, preferably 0.5 wt% or more, e.g., 1 wt% or more, and more preferably 1.5 wt% or more. The upper limit of the amount of the cyclodextrin to be contained can be 5 wt% or less, e.g., 4.5 wt% or less, 4 wt% or less, 3.5 wt% or less, preferably 3 wt% or less, and more preferably 2.5 wt% or less. The range of the content of the cyclodextrin in the mayonnaise-style dressing of the present invention can be expressed using two numerical values individually selected from the aforementioned upper limit and lower limit numerical values. For example, in the mayonnaise-style dressing of the present invention, the cyclodextrin can be contained in an amount appropriately selected from the range of 0.1 wt% to 5 wt%, preferably 0.5 wt% to 3 wt%, and more preferably 1.5 wt% to 2.5 wt%.

In the present invention, the "water-soluble gelling agent" generally means a substance that is soluble in water and imparts viscosity (sometimes also referred to as a thickening agent, a thickening stabilizer, a sizing agent, or the like). As such a water-soluble gelling agent, a polysaccharide thickener can be used, and examples thereof include carboxymethyl cellulose, glucomannan, tamarind gum, xanthan gum, t-carrageenan, locust bean gum, λ-carrageenan, κ-carrageenan, gellan gum, sodium alginate, and guar gum. The water-soluble gelling agents may be used singly, or a combination of different water-soluble gelling agents may be used. The water-soluble gelling agent is more preferably carboxymethyl cellulose, glucomannan, tamarind gum, xanthan gum, t-carrageenan, locust bean gum, λ-carrageenan, κ-carrageenan, gellan gum, or sodium alginate; the water-soluble gelling agent is still more preferably carboxymethyl cellulose, glucomannan, tamarind gum, xanthan gum, t-carrageenan, or locust bean gum; and the water-soluble gelling agent is particularly preferably carboxymethyl cellulose, glucomannan, tamarind gum, or xanthan gum.

In the mayonnaise-style dressing of the present invention, the water-soluble gelling agent can be contained in an amount by which the water-soluble gelling agent is capable of imparting, together with other components, physical properties equivalent or similar to those of mayonnaise, and for example, in the mayonnaise-style dressing, the water-soluble gelling agent can be contained in an amount of 0.01 wt% or more, e.g., 0.02 wt% or more, 0.03 wt% or more, 0.04 wt% or more, and preferably 0.05 wt% or more. The upper limit of the amount of the water-soluble gelling agent to be contained can be 5 wt% or less, e.g., 4 wt% or less, 3 wt% or less, preferably 2 wt% or less, more preferably 1 wt% or less, e.g., 0.8 wt% or less, 0.6 wt% or less, and still more preferably 0.4 wt% or less. The range of the content of the water-soluble gelling agent in the mayonnaise-style dressing of the present invention can be expressed using two numerical values individually selected from the aforementioned upper limit and lower limit numerical values. For example, in the mayonnaise-style dressing of the present invention, the water-soluble gelling agent can be contained in an amount appropriately selected from the range of 0.01 wt% to 5 wt%, preferably 0.01 wt% to 2 wt%, and more preferably 0.05 wt% to 0.4 wt%. In the present invention, the water-soluble gelling agent is used in an amount smaller than the amount generally used for the purpose of gelation of an aqueous solution, and preferably an amount by which an aqueous solution does not undergo gelation.

As the "emulsifying agent", one generally used in food and drink can be utilized. The HLB value of the emulsifying agent is not particularly limited, but an emulsifying agent having an HLB value of about 3 to 16 can be preferably utilized. Examples of the emulsifying agent that is usable in the present invention include a sucrose ester, a glycerol fatty acid ester, a sorbitan fatty acid ester, a propylene glycol fatty acid ester, and a lecithin, and one or more selected from these can be used. Particularly preferred is a lecithin. The "lecithin" is a kind of glycerophospholipid, and in the present invention, a lecithin generally used in food and drink can be utilized. Examples of the lecithin that is usable in the present invention include, but not limited to, soybean lecithin, rapeseed lecithin, sunflower lecithin, cottonseed lecithin, corn lecithin, peanut lecithin, palm lecithin, sesame lecithin, rice lecithin, perilla lecithin, linseed lecithin, egg yolk lecithin, and enzyme-decomposed lecithin and hydrogenated lecithin of these. The lecithins may be used singly, or a combination of different lecithins may be used.

In the mayonnaise-style dressing of the present invention, the emulsifying agent can be contained in an amount by which the emulsifying agent is capable of imparting, together with other components, physical properties equivalent or similar to those of mayonnaise, and for example, in the mayonnaise-style dressing of the present invention, the emulsifying agent can be contained in an amount of 0.01 wt% or more, preferably 0.05 wt% or more, and more preferably 0.1 wt% or more. The upper limit of the amount of the emulsifying agent to be contained can be 3 wt% or less, preferably 2 wt% or less, and more preferably 1 wt% or less, e.g., 0.5 wt% or less. The range of the content of the emulsifying agent in the mayonnaise-style dressing of the present invention can be expressed using two numerical values individually selected from the aforementioned upper limit and lower limit numerical values. For example, in the mayonnaise-style dressing of the present invention, the emulsifying agent can be contained in an amount appropriately selected from the range of 0.01 wt% to 3 wt%, preferably 0.05 wt% to 2 wt%, and more preferably 0.1 wt% to 1 wt%.

The mayonnaise-style dressing of the present invention further contains water. Water can be contained in an arbitrary amount, and for example, in the mayonnaise-style dressing, water can be contained in an amount of 8 wt% or more, preferably 9 wt% or more, and more preferably 10 wt% or more. The upper limit of the amount of the water to be contained is not particularly limited, but for example, it can be 85 wt% or less, preferably 50 wt% or less, and more preferably 40 wt% or less, e.g., 30 wt% or less, 20 wt% or less, or 15 wt% or less. The range of the content of the water in the mayonnaise-style dressing of the present invention can be expressed using two numerical values individually selected from the aforementioned upper limit and lower limit numerical values. For example, the water content in the mayonnaise-style dressing of the present invention can be appropriately selected from the range of 8 wt% to 85 wt%, preferably 9 wt% to 50 wt%, and more preferably 10 wt% to 40 wt%.

The mayonnaise-style dressing of the present invention can be substantially free of protein. Protein is generally composed of a hydrophobic amino acid residue and a hydrophilic amino acid residue, and from its amphiphilic characteristics, it has an emulsification action. On that account, in many emulsified foods, protein exerts a function as an emulsifying agent. In mayonnaise, protein contained in egg yolk or whole egg contained as a raw material exerts this function. On the other hand, in the present invention, the oil or fat, the cyclodextrin, the water-soluble gelling agent, and the emulsifying agent are mixed in order in the presence of water to form a composite, as described later, and excellent emulsification stability is obtained, so that protein functioning as an emulsifying agent does not need to be used. Accordingly, in the present invention, "substantially free of protein" means that protein is not contained in the mayonnaise-style dressing of the present invention in an aspect where protein exerts an emulsification action; and it is not intended that protein is not contained at all. Preferably, the above expression means that based on 1 g of the mayonnaise-style dressing of the present invention, the content of protein derived from the specific raw materials (allergic substances), etc. is less than 10 µg, and more preferably, it means that in the mayonnaise-style dressing of the present invention, protein that becomes allergic substances such as egg and milk (e.g., one or more selected from 7 specific raw materials and 21 items equivalent to specific raw materials) is not contained at all.

In the mayonnaise-style dressing of the present invention, other components usually used in the production of food and drink, such as a preservative, an antiseptic agent, an antioxidant, a coloring matter, a solvent, a solubilizing agent, a tonicity agent, a flavoring agent, a pH adjustor, a perfume, a sweetener, a taste component, and an acidulant, can be added as needed, in addition to the aforementioned components. The amounts of these other components added can be appropriately selected as long as the physical properties equivalent or similar to those of mayonnaise, which are desired in the present invention, are not hindered.

The mayonnaise-style dressing of the present invention has physical properties equivalent or similar to those of mayonnaise, has a glossiness of 30% or more in a known glossiness measuring method, and exhibits adhesion properties of a maximum load of 0.35 N or more and 1.0 N or less and an adherence of 400 J/m³ or more and 1000 J/m³ or less in a known adhesion measuring method.

The mayonnaise-style dressing of the present invention can be produced by mixing and stirring water, an oil or fat, a cyclodextrin, and a water-soluble gelling agent (step (1)), and subsequently adding an emulsifying agent to the resulting mixture and further mixing and stirring them (step (2)). In the step (1), the components of water, an oil or fat, a cyclodextrin, and a water-soluble gelling agent may be mixed and stirred all together, or the components may be added in order (in any order) separately or in an arbitrary combination, and mixed and stirred. The aforementioned other components can be appropriately added all together or in an arbitrary combination in any one of the step (1) and the step (2) or in both the steps, and mixed and stirred. By adding the emulsifying agent to a mixture of water, an oil or fat, a cyclodextrin, and a water-soluble gelling agent obtained in the step (1) later, physical properties equivalent or similar to those of mayonnaise can be achieved. The resulting mayonnaise-style dressing can be provided after an appropriate container is filled with the dressing, sealed, and subjected to heat sterilization, etc.

The present invention also relates to a kit for producing the mayonnaise-style dressing of the present invention. In the kit, an oil or fat, a cyclodextrin, a water-soluble gelling agent, an emulsifying agent, other components, and if necessary, water are contained, and they can be individually stored in different containers, or can be stored in an arbitrary combination in different containers. For example, in one embodiment, an oil or fat, a cyclodextrin, and a water-soluble gelling agent can be stored in a first container, and an emulsifying agent can be stored in a second container. Other components may be stored in the first container or in the second container, or they may be individually stored in the first container or in the second container.

The oil or fat, the cyclodextrin, the water-soluble gelling gent, the emulsifying agent, and other components contained in the kit may be each in the form of a solid such as a powder or a granulated powder (an excipient (dextrin or the like) may be utilized as needed), or may be each in the form of a liquid such as an aqueous solution or a dispersion. The components can be made to serve as constituents of the kit by subjecting them to heat sterilization, etc. before or after storing them in containers according to their forms.

The kit can be utilized according to the aforementioned method for producing a mayonnaise-style dressing of the present invention, and by adding water (when any one of the components of the kit is in the form of a liquid, water contained therein can be utilized), an oil or fat, a cyclodextrin, a water-soluble gelling agent, and if necessary, other components to a container such as a bowl, and mixing and stirring them using a mixer, a blender or the like (step (1)), and subsequently adding an emulsifying agent, and if necessary, other components to the resulting mixture, and mixing and stirring them similarly to the above (step (2)), the mayonnaise-style dressing of the present invention can be obtained.

Hereinafter, the present invention will be described with examples in more detail, but the present invention is in no way limited to these examples.

### Examples

### 1. Experimental method

### (1) Preparation of mayonnaise-style dressing

Mayonnaise-style dressings of Example 1 and Comparative Examples 1 to 4 and 6 were prepared according to the following formulation. As Comparative Example 5, commercially available mayonnaise was used. The components were mixed through two steps or one step, and when they were mixed through two steps, the components shown in the step (1) were mixed first, and thereafter, the components shown in the step (2) were added to a mixture obtained in the step (1) and mixed. Mixing of the components was carried out by stirring them at 20,000 rpm for 10 minutes using a hand blender. The amount of each component in the table is expressed in a weight ratio.

**[Table 1]**

| | Example 1 | | Comparative Example 1 | | Comparative Example 2 | | Comparative Example 3 | | Comparative Example 4 | | Comparative Example 6 | |
|---|---|---|---|---|---|---|---|---|---|---|---|---|
| Canola oil | 55 | Step (1) | 55 | One step | 55 | Step (1) | 55 | One step | 55 | Step (1) | 55 | Step (1) |
| *α* CD | 2 | | 2 | | 2 | | 2 | | 2 | | 2 | |
| Water | 13.32 | | 13.32 | | 13.62 | | 13.62 | | 13.37 | | 13.67 | |
| Xanthan gum | 0.05 | | 0.05 | | 0.05 | | 0.05 | | - | | - | |
| Oil-soluble antioxidant | 0.6 | | 0.6 | | 0.6 | | 0.6 | | 0.6 | | 0.6 | |
| Water-soluble antioxidant | 0.15 | Step (2) | 0.15 | | 0.15 | Step (2) | 0.15 | | 0.15 | Step (2) | 0.15 | Step (2) |
| Crude lecithin | 0.3 | | 0.3 | | - | | - | | 0.3 | | - | |
| Vinegar | 12 | | 12 | | 12 | | 12 | | 12 | | 12 | |
| Salt | 2 | | 2 | | 2 | | 2 | | 2 | | 2 | |
| 70% Sorbitol | 14.3 | | 14.3 | | 14.3 | | 14.3 | | 14.3 | | 14.3 | |
| Seasoning | 0.2 | | 0.2 | | 0.2 | | 0.2 | | 0.2 | | 0.2 | |
| Perfume | 0.05 | | 0.05 | | 0.05 | | 0.05 | | 0.05 | | 0.05 | |
| Coloring matter | 0.03 | | 0.03 | | 0.03 | | 0.03 | | 0.03 | | 0.03 | |
| Total | 100 | | 100 | | 100 | | 100 | | 100 | | 100 | |

The compositions obtained were stored at 4°C for 7 days or at 50°C for 7 days, and they were used in the following experiments.

### (2) Organoleptic evaluation

Ten panelists ate 3 g of each of the compositions having been stored at 4°C for 7 days or at 50°C for 7 days, and they evaluated its flavor according to the following criteria. Before eating each composition, the panelists gargled so that the influence of the composition having been previously eaten should not remain.
○: Both the flavor and the physical properties (texture) can be recognized as those of mayonnaise.
×: Any one of the physical properties (texture) and the flavor cannot be recognized as that of mayonnaise.

### (3) Evaluation of glossiness

Measurement of a glossiness of each composition was carried out based on Japanese Industrial Standards JIS Z 8741-1997 Specular glossiness-Methods of measurement using a digital glossmeter GM-026 (Nihon Sonatest Advanced Inspection Technology Inc.), that is, a cylindrical container having a diameter of 4 cm and a depth of 5 mm was filled with the composition, then surface irregularities of the composition were smoothed, and thereafter, a glossiness was measured at a digital glossmeter incident angle of 60°. At each measurement, calibration was carried out to confirm the value to be 98.3. The measured glossiness (%) was evaluated according to the following criteria based on the values of mayonnaise.
○: 30% or more
×: less than 30%

### (4) Evaluation of adhesion properties

Regarding the adhesion properties of each composition, a maximum load [N] and an adherence [J/m³] were measured using a food property tester (creep meter: REONER II CREEP METER RE2-33005B (YAMADEN co., ltd.)) according to the manufacturer's instructions under the following conditions.

**[Table 2]**

| | |
|---|---|
| Plunger used | diameter 20 mm (28075-02) |
| Storage pitch | 0.01 see |
| Measurement distortion factor | **66.67**% |
| Measurement speed | 10.00 mm/sec |
| Setback distance | **5.00mm** |
| Sample thickness | **15.00mm** |
| Contact area diameter | **20.00mm** |
| Contact area | **0.000mm** |
| Load cell | **20N** |
| Amplification | 10 times |
| Temperature | **25°C** |

The measured maximum load [N] was evaluated according to the following criteria based on the values of mayonnaise.
○: 0.35 N or more, 1.0 N or less
×: less than 0.35 N, or more than 1.0 N

The measured adherence [J/m³] was evaluated according to the following criteria based on the values of mayonnaise.
○: 400 J/m³ or more, 1000 J/m³ or less
×: less than 400 J/m³, or more than 1.0 [N]

### 2. Results

When Example 1 and Comparative Examples 1 to 5 were stored at 4°C for 7 days or at 50°C for 7 days, oil separation (demulsification) was not observed in any of the compositions. On the other hand, in Comparative Example 6, apparent oil separation was observed due to the storage at 50°C for 7 days. Comparative Example 6 had poor storage stability, so that it was not subjected to other evaluations.

Regarding Example 1 and Comparative Examples 1 to 5, the evaluation results are shown below.

It has been confirmed that only the composition of Example 1, which had been obtained by mixing water, an oil or fat, a cyclodextrin, and a water-soluble gelling agent in the step (1), and subsequently adding a lecithin to the mixture of the step (1) and further mixing them in the step (2), exhibited values equivalent to those of mayonnaise in all the evaluation items.

Comparative Example 1 had the same component formulation as that of Example 1, but when all the components were mixed through one step, Comparative Example 1 exhibited values different from those of mayonnaise in all the evaluation items differently from Example 1.

Even though the components were mixed through two steps, Comparative Examples 2 and 4 exhibited physical property values different from those of mayonnaise because the composition lacked lecithin or the water-soluble gelling agent (Comparative Examples 2 and 4).

**[Table 3]**

| | Storage at 4°C for 7 days | Storage at 50°C for 7 days | Storage at 4°C for 7 days | Storage at 50°C for 7 days | Storage at 4°C for 7 days | Storage at 50°C for 7 days | Storage at 4°C for 7 days | Storage at 50°C for 7 days |
|---|---|---|---|---|---|---|---|---|
| | Organoleptic evaluation (flavor) | | Glossiness (%) | | Maximum load [N] | | Adherence [J/m³] | |
| Example 1 | O | O | O(35.6) | O(31.6) | O(0.44) | 0(0.41) | 0(518.57) | 0(461.94) |
| Comparative Example 1 | X | X | X(20.5) | X(18.4) | X(0.08) | X(0.12) | X(34.91) | X(12.29) |
| Comparative Example 2 | O | X | X(22.6) | X(17.6) | X(1.41) | X(1.55) | X(1811.44) | X(2024.56) |
| Comparative Example 3 | O | X | X(12.2) | X(17.7) | O(0.58) | O(0.58) | 0(715.07) | 0(695.10) |
| Comparative Example 4 | O | O | O(32.3) | O(30.2) | X(0.30) | X(0.28) | X(348.06) | X(321.30) |
| Comparative Example 5 | O | O | O(40.3) | O(32.1) | O(0.58) | O(0.58) | 0(715.37) | O(638.38) |

From the above results, it has become apparent that the composition obtained by mixing water, an oil or fat, a cyclodextrin, and a water-soluble gelling agent in the step (1), and subsequently adding a lecithin to the mixture of the step (1) and further mixing them in the step (2) is capable of obtaining physical properties equivalent to those of mayonnaise, and can be utilized as a substitute for mayonnaise.

### 3. Evaluation of other emulsifying agents

### (1) Preparation and evaluation of mayonnaise-style dressing

Mayonnaise-style dressings of Examples 2, 3 and 4 were prepared in the same manner as in Example 1, except that the crude lecithin (HLB3 to 4) in the aforementioned formulation of Example 1 was replaced by the same amount of sucrose stearic acid fatty acid ester (HLB7, HLB11, or HLB16). The preparation was carried out by mixing the components through two steps of the step (1) and the step (2) similarly to Example 1.

Regarding the mayonnaise-style dressings obtained, organoleptic evaluation, evaluation of glossiness, and evaluation of adhesion properties were carried out as described above.

### (2) Results

When Examples 2, 3 and 4 were stored at 4°C for 7 days or at 50°C for 7 days, oil separation (demulsification) was not observed in any of the compositions. Moreover, it has been confirmed that any of the compositions exhibited values equivalent to those of mayonnaise in all the evaluation items. The evaluation results are shown below.

**[Table 4]**

| | Storage at 4°C for 7 days | Storage at 50°C for 7 days | Storage at 4°C for 7 days | Storage at 50°C for 7 days | Storage at 4°C for 7 days | Storage at 50°C for 7 days | Storage at 4°C for 7 days | Storage at 50°C for 7 days |
|---|---|---|---|---|---|---|---|---|
| | Organoleptic evaluation (flavor) | | Glossiness (%) | | Maximum load [N] | | Adherence [J/m³] | |
| Example 2 | O | O | O(34.8) | O(31.5) | O(0.44) | O(0.39) | O(536.58) | O482.94) |
| Example 3 | O | O | O(35.2) | O(32.3) | O(0.43) | O(0.38 | O(542.96) | O(498.11) |
| Example 4 | O | O | O(35.1) | O(31.3) | O(0.41) | O(0.37) | O(551.56) | O(484.31) |

From the above results, it has been confirmed that in the mayonnaise-style dressing of the present invention, various emulsifying agents can be preferably utilized, and their HLB values are not limited either.

## Claims

1. A mayonnaise-style dressing comprising water, an oil or fat, a cyclodextrin, a water-soluble gelling agent, and an emulsifying agent.

2. The mayonnaise-style dressing according to claim 1, being substantially free of protein.

3. The mayonnaise-style dressing according to claim 1 or 2, wherein the oil or fat is one or more selected from the group consisting of canola oil, rapeseed refined oil, soybean oil, corn oil, cottonseed oil, peanut oil, sesame oil, rice oil, rice bran oil, camellia oil, safflower oil, olive oil, linseed oil, perilla oil, perilla seed oil, sunflower oil, copra oil, palm oil, coconut oil, tea oil, avocado oil, candlenut oil, grapeseed oil, cocoa butter, wheat germ oil, almond oil, evening primrose oil, castor oil, hazelnut oil, macadamia nut oil, rosehip oil, and grape oil.

4. The mayonnaise-style dressing according to any one of claims 1 to 3, wherein the cyclodextrin is α-cyclodextrin.

5. The mayonnaise-style dressing according to any one of claims 1 to 4, wherein the water-soluble gelling agent is one or more selected from the group consisting of carboxymethyl cellulose, glucomannan, tamarind gum, xanthan gum, t-carrageenan, locust bean gum, λ-carrageenan, κ-carrageenan, gellan gum, an alginate, and guar gum.

6. The mayonnaise-style dressing according to any one of claims 1 to 5, wherein the emulsifying agent is one or more selected from the group consisting of a sucrose fatty acid ester, a glycerol fatty acid ester, a sorbitan fatty acid ester, a propylene glycol fatty acid ester, and a lecithin.

7. The mayonnaise-style dressing according to claim 6, wherein the emulsifying agent has an HLB value of 3 to 16.

8. A method for producing a mayonnaise-style dressing, comprising the following steps (1) and (2):
(1) a step of mixing water, an oil or fat, a cyclodextrin, and a water-soluble gelling agent, and
(2) a step of adding an emulsifying agent to a mixture obtained in the step (1) and further mixing the mixture and the emulsifying agent.

9. A mayonnaise-style dressing produced by the method according to claim 8.

10. A kit for producing a mayonnaise-style dressing, comprising an oil or fat, a cyclodextrin, a water-soluble gelling agent, and an emulsifying agent.
